## Europäisches Patentamt

(19) **European Patent Office**

**Office européen des brevets**

(11) Publication number: **0 094 211**
**B1**

(12) **EUROPEAN PATENT SPECIFICATION**

(45) Date of publication of patent specification: **05.11.86**

(51) Int. Cl.⁴: **A 62 B 35/00**

(21) Application number: **83302543.0**

(22) Date of filing: **05.05.83**

(54) Safety harness buckle.

(30) Priority: **06.05.82 GB 8213070**

(43) Date of publication of application:
**16.11.83 Bulletin 83/46**

(45) Publication of the grant of the patent:
**05.11.86 Bulletin 86/45**

(84) Designated Contracting States:
**AT CH DE FR GB IT LI NL SE**

(56) References cited:
**AT-B- 353 622**
**FR-A-1 359 229**
**FR-A-1 411 735**

(73) Proprietor: **ASE (UK) LIMITED**
**Norfolk Street**
**Carlisle Cumbria CA2 5HX (GB)**

(72) Inventor: **Patterson, Michael**
**22 Currock Road**
**Carlisle Cumbria CA2 4BB (GB)**

(74) Representative: **Jones, Ian et al**
**POLLAK MERCER & TENCH High Holborn House**
**52-54 High Holborn**
**London WC1V 6RY (GB)**

Courier Press, Leamington Spa, England.

## Description

The invention relates to a buckle for releasably connecting belt end portions together, for example in a safety harness for use in a road vehicle.

There is known from FR—A—1 359 229 a buckle of this kind comprising first and second buckle parts which are arranged to be secured respectively to the end portions of a lap belt and which have tongue and socket latching means whereby they can be releasably latched together. The end portions of shoulder belts are connected to respective brackets provided with slotted portions which can be received on the tongue and retained between this and the socket in the latched condition of the buckle.

The present invention provides a buckle for releasably connecting belt end portions together, the buckle comprising first and second buckle parts secured respectively to first and second belt end portions and having respective latching means whereby they can be releasably latched together, characterised in that at least one of the buckle parts has an elongate means distinct from the said latching means and insertable into an aperture of at least one further belt end portion, and retaining means on the other of the buckle parts for retaining the at least one further belt end portion on the elongate means in the latched condition of the buckle.

The buckle of the invention can be of a form which is simple to manufacture and to use. The belt end portion apertures can be conveniently constituted simply by loops formed of the belt.

The elongate means can comprise a single member in the form of a bar but conveniently two bars are provided, one for each of a pair of shoulder belt loops. The buckle parts are preferably tongue and socket parts and the two bars can both extend from the socket or the tongue part, or one bar can extend from the socket part and the other part from the tongue part. One bar can engage the other bar, or each bar can engage an abutment or can enter an aperture in the other of the buckle parts.

To provide for length adjustment of the shoulder belts, one or both can be provided with a plurality of spaced or adjacent loops of which a selected one can receive the bar or elongate means.

For a better understanding of the invention, reference may be made to the following illustrative description and the accompanying drawings, in which:

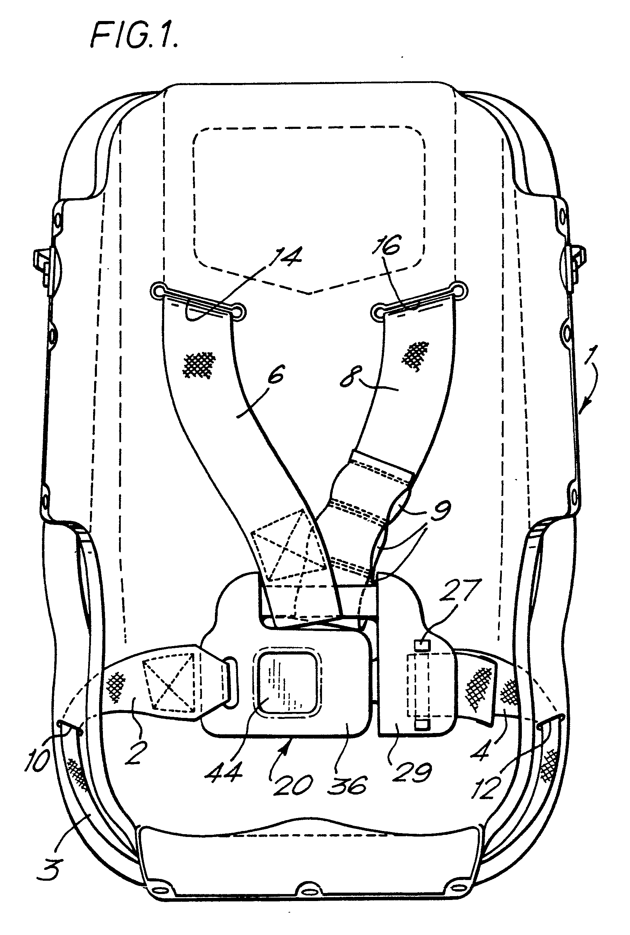

Figure 1 is a front view of a child's seat with a harness connected by a buckle embodying the invention;

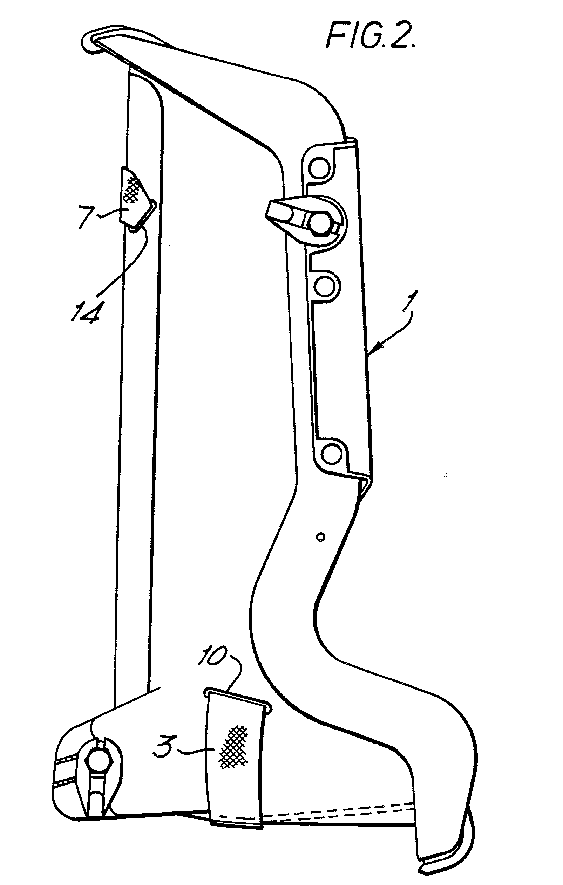

Figure 2 is a side view of the child's seat;

Figure 3 is a perspective view of co-operating frames included in the buckle of Figure 1, of which other parts have been omitted, shown in the open position;

Figure 4 is a fragmentary like view of the frames shown in the closed position;

Figure 5 is a sectinal view of the buckle of Figure 1 on a larger scale; and

Figure 6 is a perspective view of a modified belt end for use with the buckle of the invention.

The illustrated child's safety seat comprises a seat shell 1 preferably moulded in plastics material in the general form of a bucket seat. The seat mounts a harness for restraining its occupant therewithin, the harness comprising webbing of a suitable width providing left and right hand lap belt portions 2, 4 and left and right hand shoulder portions 6, 8. The lap belt portions 2, 4 extend from the rear of the shell 1 through respective slots 10, 12 in the side wall of the lower part of the shell, and the shoulder belt portions 6, 8 extend from the rear of the shell through respective inclined slots 14, 16 in the back wall of the shell. The four belt portions shown can be constituted by two lengths of webbing, each providing a shoulder and lap portion on one side, but less webbing is required for the arrangement illustrated in which the two lap portions are provided by a single length of webbing 3 which extends underneath the front of the seat shell and the two shoulder portions are provided by a second length 7 extending across the back of the seat. The shell 1 is provided with fittings for connection to straps by which the seat may be secured on the rear seat of a conventional passenger road vehicle, and particulars of these securement arrangements and of other features of the seat, which are not essential elements of the present invention can be obtained by reference to GB—A—1 546 772.

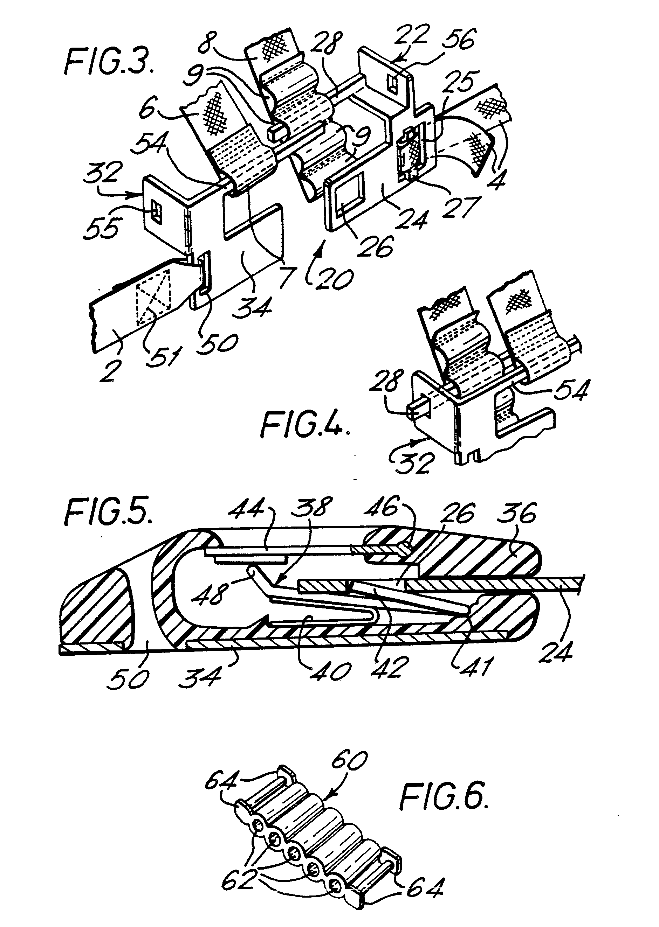

The ends of the illustrated lap and shoulder belt portions 2, 4, 6, 8 are releasably connected together in use by the buckle 20 of the invention. As shown in Figure 3, the buckle comprises a first part 22 having a frame with a flat generally rectangular tongue 24 projecting in use towards a second buckle part 32, the tongue being provided near its free end with a latching aperture 26. The frame parts can be integral metal stampings or rigid plastics mouldings. The frame of the buckle part 22 also has an angle section extending transversley of the plane of the tongue 24, and from the end of this section remote from the tongue a bar 28 of generally square cross-section extends parallel to the tongue. The bar 28 can be received in use in a selected one of a plurality of loops 9, formed at the end of the shoulder belt portion 8 by folding back the end of the webbing and stitching it to itself at spaced positions between which the loops are defined. The end of the lap belt portion 4 is adjustably connected to the frame part 22 so that the effective length of the lap belt can be adjusted. Thus, the belt portion is entrained through an aperture 25 in the frame, round a snubber bar 27 and back through aperture 25. The ends of the snubber bar 27 extend outwardly of a housing 29 for the frame and the belt length can be readily adjusted by operation of the snubber bar and the free end of the belt portion. The other buckle part 32 has a frame with a flat plate 34 portion carrying a housing 36, in the form of a plastics moulding, providing a socket in which the tongue 24 can be releasably received.

The housing 36 mounts within it a latch member 38 urged by a spring 40 to pivot on a support portion 41 of the housing, so as to engage a latching portion 42 of the member into the aperture 26 of the tongue 24 when this is received in the socket. An aperture in the outer wall of the housing 36 allows access to a release member 44 also pivoted in the housing at 46 so that this can be depressed into the housing when release of the tongue 24 is required. Such release is effected by engagement of the underside of the member 44 with an end portion 48 of the latch member to pivot this against the spring 40 so that the latch portion 42 is withdrawn from the aperture 26. The lap belt end 2 is looped through a common aperture 50 provided in the plate portion 34 and the housing 36 and secured to itself by stitching 51.

The plate portion 34 extends upwardly above the aperture 50 and a second bar 54 of approximately square cross-section projects towards the other end of the plate portion parallel to and in the plane thereof. The bar 54 is received in use in a loop formed at the end of the shoulder belt portion 6.

The frame part 32 also has a portion at right angles to the plate portion 34 and an aperture 55 in this portion receives the free end of the bar 28 when the two frame parts are assembled together in latching relationship, a shown in Figure 4. The frame part 22 likewise has an aperture 56 for receiving the free end of the bar 54 in the latching condition. The tongue 24 can be received within the socket of the housing 36 in only one orientation and this ensures that the bars 28 and 54 register with the apertures 55 and 56 when the buckle is latched.

Instead of providing the loops 9 for adjustment of the effective length of the webbing of the shoulder belts 6, 8, there can be employed a plastics fitting 60 providing five sleeves 62 in aligned side-by-side relationship, each sleeve being capable of receiving the bar 28 therethrough, as shown in Figure 6. The fitting 60 is associated with the belt by looping this around the fitting and closing the loop with stitching. At either end of the fitting 60 an end piece provides flanges 64 by which the fitting is held within the loop.

It will be evident that the invention can be embodied in a variety of ways other than as specifically described, in so far as the embodiments fall within the scope of the claims.

**Claims**

1. A buckle (20) for releasably connecting belt end portions together, the buckle comprising first and second buckle parts (22, 32) arranged to be secured respectively to first and second belt end portions (2, 4) and having respective latching means (26, 42) whereby they can be releasably latched together, characterised in that at least one of the buckle parts has an elongate means (28, 54) distinct from the said latching means (26, 42) and insertable into an aperture (9, 62) of at least one further belt end portion (6, 8), and retaining means (55, 56) on the other of the buckle parts for retaining the at least one further belt end portion on the elongate means (28, 54) in the latched condition of the buckle (20).

2. A buckle as claimed in claim 1 wherein the first and second belt end portions (2, 4) comprise lap belt end portions of a safety harness and the further belt end portions (6, 8), or each of the two further belt end portions (6, 8) comprises a shoulder belt end portion of the harness.

3. A buckle as claimed in claim 2 wherein the elongate means comprises first and second bars (28, 54) each projecting from a respective one of the first and second buckle parts (22, 32).

4. A buckle as claimed in claim 3 wherein the first and second bars (28, 54) extend in lateral adjacency in the latched condition of the buckle (20).

5. A buckle as claimed in any preceding claim wherein the retaining means comprises an aperture or apertures (55, 56) into which the free end of the or each elongate means (28, 54) is received in the latched condition of the buckle.

6. A buckle as claimed in any preceding claim wherein the aperture of the or each further belt end portion (6, 8) is constituted by a loop (9) formed from the belt.

7. A buckle as claimed in any one of claims 1 to 5 wherein the or each aperture (62) of the or each further belt end portion (6, 8) is provided by a fitting (60) retained within a loop formed from the belt end portion.

8. A buckle as claimed in any preceding claim wherein the at least one further belt end portion (6, 8) has a plurality of the apertures (9; 62) whereby the effective length thereof can be selectively adjusted.

9. A buckle as claimed in any preceding claim wherein the first and second buckle parts (32, 22) comprise respectively a socket part and a tongue part receivable therein, and the elongate means (28, 54) extend substantially parallel to the direction of movement of the tongue part into and out of the socket part.

10. A buckle as claimed in claim 9 wherein one or each of the first and second buckle parts (32, 22) comprises a rigid member having the elongate means (28, 54) integrally formed therewith.

**Patentansprüche**

1. Verschluß (20) zum lösbaren Vebinden der Endteile von Gurten, wobei der Verschluß erste und zweite Verschlußteile (22, 32) aufweist, die mit ersten bzw. zweiten Gurtendteilen (2, 4) verbindbar sind, und entsprechende Schnappeinrichtungen (26, 42) besitzen, die lösbar ineinander einschnappen Können, dadurch gekennzeichnet, daß zumindest einer der Verschlußteile einen von den Schnappeinrichtungen (26, 42) verschiedenen Längsteil (28, 54) aufweist, der in eine Öffnung (9, 62) zumindest eines weiteren Gurtendteiles (6, 8) einführbar ist, sowie Halteeinrichtungen (55, 56) an dem anderen der Verschlußteile zur Sicherung des zumindest eines weiteren Gurtendteiles auf dem Längsteil (28, 54) im eingeschnappten Zustand des Verschlusses (20).

2. Verschluß nach Anspruch 1, bei welchem die ersten und zweiten Gurtendteile (2, 4) Bauchgurtendteile eines Sicherheitsgurtes aufweisen und der weitere Gurtendteil (6, 8) oder jeder der zwei weiteren Gurtendteile (6, 8) einen Schultergurtendteil des Sicherheitsgurtes aufweist.

3. Verschluß nach Anspruch 2, bei welchem der Längsteil erste und zweite Stäbe (28, 54) aufweist, die je von den zugehörigen ersten und zweiten Verschlußteilen (22, 32) abstehen.

4. Verschluß nach Anspruch 3, bei welchem sich der erste und zweite Stab (28, 54) bei eingeschnapptem Verschluß (20) in seitlicher Nachbarschaft erstrecken.

5. Verschluß nach irgendeinem der vorhergehenden Ansprüche, bei welchem die Halteeinrichtung eine Öffnung oder Öffnungen (55, 56) aufweist, in welcher im eingeschnappten Zustand des Verschlusses das freie Ende des oder der Längsteile (28, 54) aufgenommen ist.

6. Verschluß nach irgendeinem der vorhergehenden Ansprüche, bei welchem die Öffnung des oder der weiteren Gurtendteile (6, 8) von einer im Gurt geformten Schleife (9) gebildet ist.

7. Verschluß nach irgendeinem der Ansprüche 1 bis 5, bei welchem die oder jede Öffnung (62) des oder jedes weiteren Gurtendteiles (6, 8) von einem Bauteil (60) gebildet ist, der innerhalb einer aus dem Gurtteil geformten Schleife gehalten ist.

8. Verschluß nach irgendeinem der vorhergehenden Ansprüche, bei welchem zumindest ein weiterer Gurtteil (6, 8) eine Mehrzahl der Öffnungen (9, 62) aufweist, wobei dessen wirksame Länge wahlweise einstellbar ist.

9. Verschluß nach irgendeinem der vorhergehenden Ansprüche, bei welchem der erste und zweite Verschußteil (32, 22) einen Sockelteil bzw. einen darin aufnehmbaren Zungenteil aufweisen und sich die Längsteile (28, 54) im wesentlichen parallel zu der Richtung der Bewegung des Zungenteils in und aus den bzw. dem Sockelteil erstrecken.

10. Verschluß nach Anspruch 9, bei welchem ein oder jeder des ersten und zweiten Verschlußteils (32, 22) einen starren Teil aufweist, mit dem die Längsteile (28, 54) einstückig geformt sind.

**Revendications**

1. Boucle (20) pour relier l'une à l'autre de façon séparable des parties d'extrémité de ceinture, la boucle comprenant une première et une deuxième parties de boucle (22, 32) prévues pour être fixées respectivement à une première et une deuxième parties d'extrémité de ceinture (2, 4) et comportant des moyens de verrouillage respectifs (26, 42) par lesquels elles peuvent être verrouillées ensemble de façon séparable, caractérisée en ce qu'au moins l'une des parties de boucle comporte un élément allongé (28, 54), distinct des moyens de verrouillage (26, 42) et insérable dans une ouverture (9, 62) d'au moins une autre partie d'extrémité de ceinture (6, 8), et des moyens de retenue (55, 56) sur l'autre des parties de boucle pour retenir ladite au moins une autre partie d'extrémité de ceinture sur l'élément allongé (28, 54) dans l'état verrouillé de la boucle (20).

2. Boucle suivant la revendication 1, dans laquelle les première et deuxième parties d'extrémité de ceinture (2, 4) comprennent des parties d'extrémité de ceinture de taille d'un harnais de sécurité, et l'autre partie d'extrémité de ceinture (6, 8) ou chacune des deux autres parties d'extrémité de ceinture (6, 8), comprend une partie d'extrémité de ceinture d'épaule du harnais.

3. Boucle suivant la revendication 2, dans laquelle les moyens allongés comprennent une première et une deuxième barres (28, 54) faisant chacune saillie à partir de l'une respective des première et deuxième parties de boucle (22, 32).

4. Boucle suivant la revendication 3, dans laquelle les première et deuxième barres (28, 54) s'étendent de façon latéralement adjacente, dans l'état verrouillé de la boucle (20).

5. Boucle suivant l'une quelconque des revendications précédentes, dans laquelle les moyens de retenue comprennent une ouverture ou des ouvertures (55, 56) dans lesquelles l'extrémité libre de l'élément allongé ou de chaque élément allongé (28, 54) est reçue, dans l'état verrouillé de la boucle.

6. Boucle suivant l'une quelconque des revendications précédentes, dans laquelle l'ouverture de la ou de chaque autre partie d'extrémité de ceinture (6, 8) est constituée par une boucle (9) formée par la ceinture.

7. Boucle suivant l'une quelconque des revendications 1 à 5, dans laquelle la ou chaque ouverture (62) de la ou chaque autre partie d'extrémité de ceinture (6, 8) est constituée par un raccord (60) retenu à l'intérieur d'une boucle formée par la partie d'extrémité de ceinture.

8. Boucle suivant l'une quelconque des revendications précédentes, dans laquelle ladite au moins une autre partie d'extrémité de ceinture (6, 8) comporte une pluralité des ouvertures (9, 62), de sorte que sa longueur effective peut être réglée sélectivement.

9. Boucle suivant l'une quelconque des revendications précédentes, dans laquelle les première et deuxième parties de boucle (32, 22) comprennent respectivement un emboîtement et une languette qui peut être reçue dans l'emboîtement, et les moyens allongés (28, 54) s'étendent sensiblement parallèlement à la direction de pénétration et de sortie de la languette par rapport à l'emboîtement.

10. Boucle suivant la revendication 9, dans laquelle l'une ou chacune des première et deuxième parties de boucle (32, 22) comprend un élément rigide avec lequel les moyens allongés (28, 54) sont formés solidairement.

## FIG.1.

FIG.2.

FIG.3.

FIG.4.

FIG.5.

FIG.6.